# EUROPÄISCHE PATENTSCHRIFT

(11) **EP 2 765 014 B1**
(45) Veröffentlichungstag und Bekanntmachung des Hinweises auf die Patenterteilung: **07.10.2015**
(21) Anmeldenummer: 14151867.0
(22) Anmeldetag: 21.01.2014
(51) Int. Cl.: B60G 21/055, B21C 37/08, F16F 1/14, C21D 7/00, C21D 8/00, C22C 38/04

(54) **Verfahren zur Herstellung eines Kraftfahrzeugstabilisators**
Method for producing a vehicle stabiliser
Procédé de fabrication d'un stabilisateur de véhicule automobile

(30) Priorität: 08.02.2013 DE 102013101276
(43) Veröffentlichungstag der Anmeldung: 13.08.2014
(73) Patentinhaber: Benteler Automobiltechnik GmbH, 33102 Paderborn (DE)
(72) Erfinder: Frehn, Andreas, 33129 Delbrück (DE); Hammelmeier, Ullrich, 33104 Paderborn (DE)
(74) Vertreter: Griepenstroh, Jörg

(56) Entgegenhaltungen:
- EP-A1- 0 576 107
- EP-A1- 2 341 156
- EP-A2- 0 753 595
- EP-A2- 0 753 597
- EP-A2- 1 029 720
- EP-A2- 1 238 750
- EP-A2- 2 009 120
- JP-A- 2001 150 917
- KR-B1- 100 807 959

## Beschreibung

Die vorliegende Erfindung betrifft ein Verfahren zur Herstellung eines Kraftfahrzeugstabilisators gemäß den Merkmalen im Patentanspruch 1.

Aus dem Stand der Technik ist es bekannt in Kraftfahrzeugen zur Verbesserung der Fahreigenschaften sowie zur Optimierung des Wankverhaltens des Kraftfahrzeuges, Kraftfahrzeugstabilisatoren einzusetzen. Diese Kraftfahrzeugstabilisatoren verbinden das jeweilige Rad einer Seite des Kraftfahrzeuges mit dem an der gleichen Achse auf der gegenüberliegenden Seite des Kraftfahrzeuges angeordneten Rad. Zumeist ist ein Kraftfahrzeugstabilisator als Torsionsprofil ausgebildet, so dass eine Verbindung auf einem Stabilisatorstab von einer Seite des Kraftfahrzeuges zur anderen Seite ausgebildet ist. Dabei wird die Verbindung zumeist als Torsionsstab ausgebildet, wobei durch das Einfedern eines Rades auf der einen Seite eine Torsion der Verbindung bzw. des Torsionsstabes hervorgerufen wird.

Der Torsionsstab ist weiterhin aufgrund der kinematischen Koppelung des Kraftfahrzeugstabilisators mit einer jeweiligen Radaufhängung zumindest an seinen Enden, insbesondere jedoch auch über seinen Verlauf hinweg mehrfach gebogen. Somit tritt über den Verlauf hinweg zumindest abschnittsweise eine unterschiedliche Belastung, insbesondere ein voneinander verschiedener Spannungszustand innerhalb des Kraftfahrzeugstabilisatorstabes selber auf.

Ein aus einem Kraftfahrzeugstabilisatorstab bestehender Kraftfahrzeugstabilisator wird als passiver Kraftfahrzeugstabilisator bezeichnet. Dieser ist aufgrund seiner geometrischen Form sowie seiner Festigkeitseigenschaften in der Stabilisierungswirkung begrenzt.

Um das Einsatzfeld zu erweitern sind aus dem Stand der Technik weiterhin aktive Kraftfahrzeugstabilisatoren bekannt, bei denen ein Aktor mit einer Stabilisatorhälfte verbunden ist, sodass zumindest semiaktiv oder aber sogar aktiv in den Wankausgleich eingegriffen werden kann. Bezogen auf die Kraftfahrzeugquerrichtung ist somit die durch die jeweilige Stabilisatorhälfte zur Verfügung stehende Fläche bzw. das Material um die Breite des Aktors reduziert.

Aus der EP 1 029 720 A2 ist die Herstellung eines Kraftfahrzeugstabilisators bekannt, wobei ein Stabilisatorstab als hohles Rohrbauteil hergestellt wird, bei dem aus einem Blechstreifen aus einem Stahlband mit weniger als 10% Mangananteil ein Rohrprofil gebogen und längsnahtgeschweißt wird, wobei dann das Rohrprofil kalt zu einem Stabilisatorstab mit gewünschter Kontur umgeformt wird.

Auch sind aus der JP 2001/150917 A sowie der KR 100 807 959 B1 Herstellungsverfahren für Kraftfahrzeugstabilisatoren bekannt.

Aufgabe der vorliegenden Erfindung ist es somit ausgehend vom Stand der Technik, ein Herstellungsverfahren aufzuzeigen, mit dem es möglich ist eine Stabilisatorhälfte belastungsoptimiert und zugleich kostengünstig herzustellen.

Die zuvor genannte Aufgabe wird erfindungsgemäß mit dem Verfahren gemäß den Merkmalen im Patentanspruch 1 gelöst.

Vorteilhafte Ausführungsvarianten des erfindungsgemäßen Verfahrens sind Gegenstand der abhängigen Patentansprüche.

Das erfindungsgemäße Verfahren zur Herstellung eines Kraftfahrzeugstabilisators, wobei ein Stabilisatorstab als hohles Rohrbauteil ausgebildet ist, ist gekennzeichnet durch folgende Verfahrensansprüche:
- Bereitstellen eines Stahlbandes aus einer hochmanganhaltigen Stahllegierung, die TWIP und/oder TRIP Eigenschaften aufweist,
- Formen eines Rohrprofils aus dem Stahlband und Längsnahtschweißen des Rohrprofils,
- Biegen des Stabilisatorstabes.

Die vorliegende Erfindung sieht insbesondere vor, dass ein hochmanganhaltiger austenitischer Stahl der TWIP Eigenschaften (twinning induced plasticity) oder aber TRIP Eigenschaften (transformation induced plasticity) besitzt, mit einem Dickenbereich insbesondere von mehr als 2,5 mm verwendet wird. Hierdurch wird es ermöglicht ein Stahlband bereitzustellen und dieses Stahlband zu einem Rohrprofil zu formen und durch Längsnahtschweißen ein zunächst endloses Rohr hertzstellen. Durch ein Ablängen des Rohres ist es dann wiederum möglich, die so hergestellten Rohre durch einen Biegevorgang zu dem gewünschten Stabilisatorstab zu biegen und optional einer weiteren Verarbeitung zu einem Kraftfahrzeugstabilisator zuzuführen. Insbesondere ist es in einem jeweiligen Endbereich eines Stabilisatorstabes notwendig diesen entsprechend dreidimensional zu formen bzw. zu biegen, so dass er sich in den Bauraum unter Berücksichtigung der Achskinematik einfügt. Mithin wird der aus dem gebogenen Rohr hergestellte Stabilisatorstab dann im Falle eines passiven einstückigen und werkstoffeinheitlichen Kraftfahrzeugstabilisators mit Gummimetalllagern gekoppelt und/oder beispielsweise an den Enden mit einer Aufnahmemöglichkeit zur Anbindung der jeweiligen Achskomponenten versehen. Hierunter ist insbesondere ein Abplatten bzw. Flachdrücken der Enden mit anschließender Lochung zur Aufnahme einer Verschraubung oder aber eines Lagers zu verstehen. Die Herstellung von Kraftfahrzeugstabilisatorstäben zur Anbindung an einen aktiven Kraftfahrzeugstabilisator werden weiter unten beschrieben. Auch ist unter einer Weiterverarbeitung ein Beschichtungs- oder aber Lackiervorgang zu verstehen. Beispielsweise kann der Stabilisatorstab pulverbeschichtet werden oder aber lackiert werden. Im Rahmen der Erfindung kann der Stabilisator auch einem KTL-Verfahren zugeführt werden. Die Lackierung bzw. Beschichtung wird insbesondere nach Abschluss aller Biege- und Fügeoperationen durchgeführt, so dass eine weitergehende Beschädigung der Beschichtung durch diese Operation vermieden ist.

Es wird eine Stahllegierung mit folgender Zusammensetzung, ausgedrückt in Gewichtsprozent verwendet:

| | | |
|---|---|---|
| Kohlenstoff (C): | max. | 2% |
| Mangan (Mn): | | 10-30% |
| Silizium (Si): | max. | 6% |
| Aluminium (Al): | max. | 8% |
| Niob (Nb): | max. | 1% |
| Vanadium (V): | max. | 1% |
| Titan (Ti): | max. | 1% |

Rest Eisen und Begleitelemente.

Unter einer weiteren Verarbeitung zu einem Kraftfahrzeugstabilisator ist insbesondere eine Verarbeitung in den Endbereichen der so hergestellten Stabilisatorstäbe zu verstehen, dass beispielsweise diese an einen Aktor eines aktiven Stabilisators gekoppelt werden, oder aber mit einem Flansch gekoppelt werden, wobei dann wiederum der Flansch an den Aktor des aktiven Stabilisators gekoppelt wird. Insbesondere erfolgt diese Koppelung stoffschlüssig durch Schweißen und/oder formschlüssig.

Mitunter werden also Stahlbänder insbesondere in einem Dickenbereichen zwischen 1,5 und 10 mm, bevorzugt 2 mm bis 8 mm und besonders bevorzugt zwischen 2,5 und 6 mm zunächst mit dem erfindungsgemäßen Verfahren zu einem Rohrprofil geformt und durch Längsnahtschweißen ein Rohr hergestellt. Dabei weist das Stahlband insbesondere im Anlieferungszustand eine Streckgrenze zwischen 400 und 600 MPa, bevorzugt 450 und 550 MPa und insbesondere von ca. 500 MPa auf. Durch den Kaltwalzprozess erfolgt eine Verfestigung auf eine Streckgrenze zwischen 1000 und 1400 MPa, insbesondere zwischen 1100 und 1300 MPa und bevorzugt von ca. 1200 MPa. Durch das Formen des Rohrprofils wird je nach Rohrabmessung und Herstellungsprozess an dem Rohr selbst eine Streckgrenze zwischen 600 und 1200 MPa eingestellt. Durch das Längsnahtschweißen erfolgt eine Veränderung der Streckgrenze in zu vernachlässigender Weise. Durch das nachfolgende Biegen des Rohres selber bleibt die Streckgrenze zwischen 600 und 1200 MPa erhalten oder wird durch den Biegeprozess in den Biegeradien gegebenenfalls verstärkt.

Dadurch, dass der Stahl einen TWIP und/oder TRIP Eigenschaften besitzt, erfolgt eine hohe Verfestigung während des Verformens durch Zwillingsbildung (TWIP Effekt) oder aber es erfolgt eine hohe Verfestigung durch Umwandlung von metastabilem kohlenstoffreichen Austenit, der durch eine Verformungsinduzierung in Martensit umgewandelt wird (TRIP Effekt).

Durch das erfindungsgemäße weitere Biegen eines bereits so vorverfestigten Rohres erfolgt dann insbesondere im Bereich der Biegungen des gebogenen Stabilisatorstabes eine weitergehende Verfestigung. Gerade in den Biegebereichen ist auch eine entsprechende Verfestigung notwendig, um eine hinreichende Festigkeit und damit auch gleichzeitig Dauerhaltbarkeit des auf Biegewechselbeanspruchten Kraftfahrzeugstabilisators.

Im Rahmen der Erfindung ist es somit vorstellbar, dass in besonders bevorzugter Ausführungsvariante wird das Verfahren zunächst derart durchgeführt wird, dass das Bandmaterial im Ausgangszustand oder aber im Kaltnachgewalzten Zustand zu einem Rohrprofil geformt wird und dann mittels Hochfrequenzschweißen oder aber Laserschweißen zu dem entsprechenden Endlosrohr gefügt wird. Insbesondere durch das kalte Nachwalzen ist es möglich voneinander verschiedene Festigkeitslevel und/oder voneinander verschiedene Wandstärken an den Bauteilen einzustellen.

In einer weiteren bevorzugten Ausführungsvariante des erfindungsgemäßen Verfahrens wird das Bandmaterial zu einem Rohrprofil umgeformt und anschließend mit Hochfrequenzschweißen zu einem Endlosrohr geschweißt. Das so hergestellte Rohr wird dann über einen Dorn nachgezogen insbesondere kalt nachgezogen, wobei je nach Umformgrad des Nachziehens gegebenenfalls auch ein Zwischenglühen stattfinden kann.

Ein erfindungsgemäß hergestellter Kraftfahrzeugstabilisatorstab bedarf somit keiner kostenintensiven Vergütungsbehandlung und erreicht dennoch eine hohe Festigkeit, wobei das Material zunächst gut umformbar ist. Hierdurch sinken die Produktionskosten zum einen aufgrund der nachgeschalteten Produktionsschritte, zum anderen sinkt der Energiebedarf in der Fertigungslinie. Auf aufwendige Temperiervorrichtungen sowie Werkzeugen mit hohen Umformkräften kann somit verzichtet werden.

Weiterhin wird das Verfahren insbesondere mit einem Längsnahtschweißen als Hochfrequenzschweißen oder aber als Laserschweißen durchgeführt. Hierdurch wird trotz des thermischen Fügeverfahrens eine homogene Härteverteilung über den Rohrquerschnitt erzeugt, es erfolgt also im Bereich der Fügenaht und/oder der Wärmeeinflusszone keine wesentliche Aufhärtung, so dass beispielsweise eine an das thermische Fügen nachfolgende Normalisierungsbehaltung entfallen kann. Hierdurch sinken wiederum die Produktionskosten.

Dadurch, dass keine aufwendigen Wärmebehandlungen in Form eines Vergütens oder aber Normalisierens stattfinden, ist ein weiterer erfindungsgemäßer Vorteil, dass keine Randeffekte wie beispielsweise eine Entkohlung oder aber eine Oxidation erfolgen, darüber hinaus kann auf korrosive Abschreckmedien verzichtet werden, was wiederum die Dauerhaltbarkeit eines erfindungsgemäß hergestellten Kraftfahrzeugstabilisatorstabes erhöht.

Im Rahmen der Erfindung ist es somit möglich ein austenitisches Gefüge in dem Kraftfahrzeugstabilisatorstab herzustellen, das eine hohe Zähigkeit und eine langsame Rissfortschrittsgeschwindigkeit aufweist, so dass der Kraftfahrzeugstabilisatorstab optimal auf die Biegewechselbeanspruchungen während seiner Einsatzdauer abgestimmt ist. Insbesondere wird dies durch den Einsatz eines Stahls erreicht, der einen Kohlenstoffgehalt von bis zu 0,6 % sowie einen Mangananteil zwischen 20 und 30% sowie andere Legierungsbestandteile, Rest Eisen und erschmelzungsbedingte Verunreinigungen aufweist.

Weiterhin besonders bevorzugt wird das Stahlband vor der Umformung zu einem Rohrprofil kalt nachgewalzt. Hierdurch ist es möglich zumindest lokal aufgrund des Abwalzgrades und/oder der Variation der Wandstärke eine voneinander verschiedene Festigkeit derart einzustellen, dass durch den TWIP und/oder TRIP Effekt in den Biegebereichen eine erhöhte Festigkeit erzeugt wird, und in den nicht nochmals separat gebogenen Bereichen oder aber nur gering umgeformten Bereichen durch den Kaltwalzprozess ebenfalls eine erhöhte Festigkeit eingestellt wird.

Weiterhin ist es im Rahmen der Erfindung möglich, dass das Rohr nach dem Längsnahtschweißen über einen Dorn gezogen wird, insbesondere im Kaltziehverfahren. Durch das Dornziehverfahren wird wiederum eine Erhöhung der Festigkeit erreicht, wobei diese Festigkeitssteigung im Wesentlichen erst nach dem Umformen des Stahlbandes zu dem Rohrprofil eingestellt wird, wodurch zunächst eine bessere Umformbarkeit des Rohrprofils gewährleistet ist.

Optional ist es im Rahmen der Erfindung möglich, dass das Rohrprofil warm umgeformt wird und/oder wärmenachbehandelt wird, insbesondere erfolgt das warme Umformen beim Biegen des Stabilisatorstabes. Die Wärmenachbehandlung erfolgt ganz besonders bevorzugt nach dem Biegen des Stabilisatorstabes. In dieser Verbindung ist dann möglich, dass insbesondere bei einem warmumgeformten Rohrprofil das Werkzeug zumindest partiell gekühlt ist.

Weitere Vorteile, Besonderheiten, Merkmale und Aspekte der vorliegenden Erfindung werden in den nachfolgend schematischen Figuren dargestellt. Diese dienen dem einfachen Verständnis der Erfindung. Es zeigen:
- Figur 1a - d: ein Herstellungsverfahren für ein Stabilisatorstab und
- Figur 2: ein Kraftfahrzeugstabilisator,
- Figur 3 und 4: eine Draufsicht und eine Seitenansicht auf ein Ende eines Kraftfahrzeugstabilisators.

In den Figuren werden für gleiche oder ähnliche Bauteile dieselben Bezugszeichen verwendet, auch wenn eine wiederholte Beschreibung aus Vereinfachungsgründen entfällt.

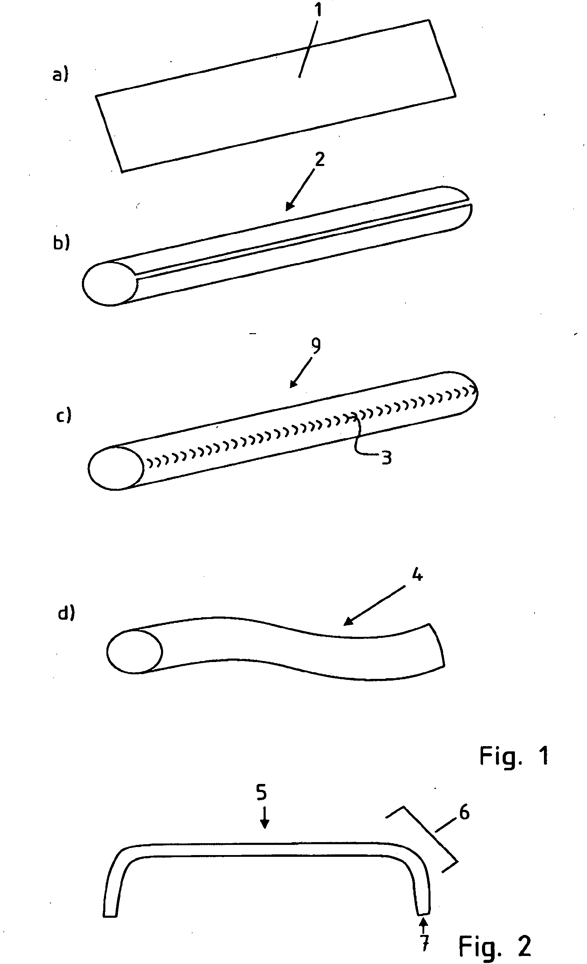

In Figur 1a bis d ist das Herstellen eines erfindungsgemäßen Stabilisatorstabes 4 gezeigt. Zunächst wird ein abgelängtes Stahlband 1 aus einer hochmanganhaltigen Stahllegierung, die TWIP und/oder TRIP Eigenschaften aufweist, bereitgestellt.

Dieses wird dann umformtechnisch derart bearbeitet, dass ein Rohrprofil 2 bereitgestellt wird, welches mit einer Längsnaht 3 zu einem Rohr 9 geschweißt wird. Im Anschluss daran wird das so hergestellte Rohr 9 zu dem Stabilisatorstab 4 gebogen.

In Figur 2 ist dann ein entsprechender Kraftfahrzeugstabilisator 5 gezeigt, der in seinen Endbereichen 6 dreidimensional gebogen ist, so dass dieser hier beispielsweise an einen Achsschenkel oder aber einen Querlenker koppelbar ist.

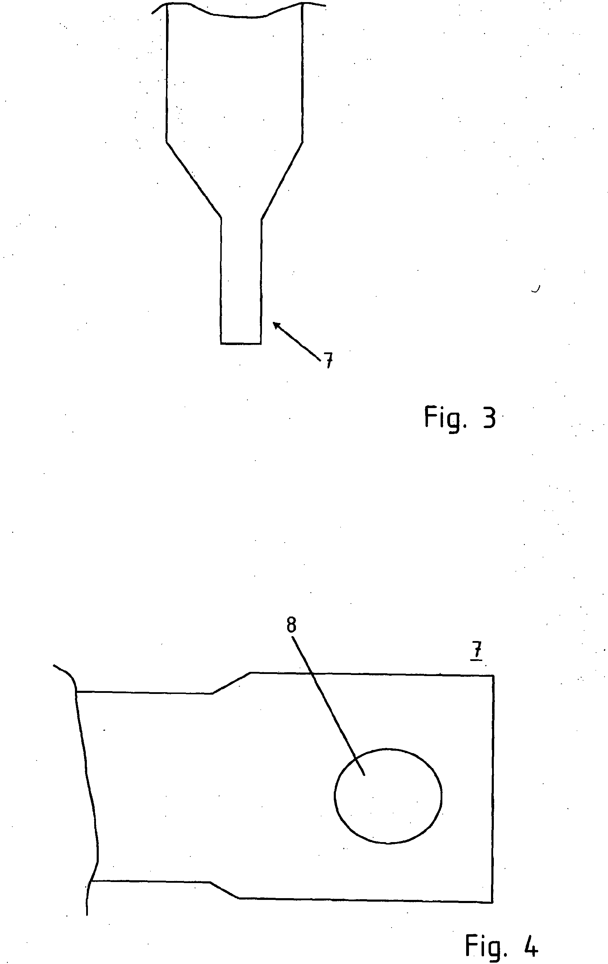

Figur 3 zeigt eine Draufsicht auf ein Ende 7 des Kraftfahrzeugstabilisators 5 in einer Draufsicht von oben. Das Ende 7 ist zusammengedrückt, so dass es gemäß Seitenansicht aus Figur 4 mit einem Loch bzw. einer Ausnehmung 8 versehen werden kann, zur Anbindung einer nicht näher dargestellten Schraubverbindung an einer Achskomponente oder ähnlichem.

### Bezugszeichen:

1 -Stahlband
2 -Rohrprofil
3 -Längsnäht
4 -Stabilisatorstab
5 -Kraftfahrzeugstabilisator
6 -Endbereich zu 5
7 -Ende zu 5
8 -Ausnehmung
9 -Rohr

## Patentansprüche

1. Verfahren zur Herstellung eines Kraftfahrzeugstabilisators (5), wobei ein Stabilisatorstab (4) als hohles Rohrbauteil ausgebildet wird, **gekennzeichnet, durch** folgende Verfahrensschritte:
- Bereitstellen eines Stahlbandes (1) aus einer hochmanganhaltigen Stahllegierung, die TWIP und/oder TRIP Eigenschaften aufweist und folgende Zusammensetzung ausdrückt in Gewichtsprozent besitzt
| | | |
|---|---|---|
| Kohlenstoff (C): | max. | 2% |
| Mangan (Mn): | | 10-30% |
| Silizium (Si): | max. | 6% |
| Aluminium (Al): | max. | 8% |
| Niob (Nb): | max. | 1% |
| Vanadium (V): | max. | 1% |
| Titan (Ti): | max. | 1% |
Rest Eisen und Begleitelemente.
- Formen eines Rohrprofils (2) aus dem Stahlband (1) und Längsnahtschweißen des Rohrprofils (2),
- Biegen des Stabilisatorstabes (4).

2. Verfahren nach Anspruch 1, **dadurch gekennzeichnet, dass** das Längsnahtschweißen als Hochfrequenzschweißen oder als Laserschweißen durchgeführt wird.

3. Verfahren nach einem der Ansprüche 1 oder 2, **dadurch gekennzeichnet, dass** das Stahlband (1) vor der Formung zu einem Rohrprofil (2) kalt gewalzt wird.

4. Verfahren nach einem der Ansprüche 1 bis 3, **dadurch gekennzeichnet, dass** beim Biegen des Stabilisatorstabes (4) in den Biegebereichen eine Verfestigung des Werkstoffes hergestellt wird.

5. Verfahren nach einem der Ansprüche 1 bis 4, **dadurch gekennzeichnet, dass** nach dem Längsnahtschweißen das hergestellte Rohr (9) über einen Dorn gezogen wird, insbesondere im Kaltziehverfahren.

6. Verfahren nach dem vorhergehenden Anspruch, **dadurch gekennzeichnet, dass** vor oder nach dem Kaltziehverfahren ein Glühprozess durchgeführt wird

7. Verfahren nach einem der Ansprüche 1 bis 6, **dadurch gekennzeichnet, dass** das Rohrprofil (2) warm umgeformt wird.

8. Verfahren nach dem vorhergehenden Anspruch, **dadurch gekennzeichnet, dass** das Werkzeug zum Warmumformen zumindest partiell gekühlt wird.

9. Verfahren nach einem der vorhergehenden Ansprüche, **dadurch gekennzeichnet, dass** ein passiver Kraftfahrzeugstabilisator (5) hergestellt wird, wobei ein jeweiliges Ende (7) des Kraftfahrzeugstabilisators (5) mit einer Aufnahme zur Koppelung mit externen Bauteilen versehen ist.

10. Verfahren nach dem vorhergehenden Anspruch, **dadurch gekennzeichnet, dass** das Ende (7) abgeplattet wird und mit einer Ausnehmung (8) zur Anbindung an ein weiteres Bauteil versehen wird.

## Claims

1. Method for producing a motor vehicle stabiliser (5), a stabiliser rod (4) being configured as a hollow tubular component, **characterised by** the method steps of:
- providing a steel strip (1) made of a high-manganese-content steel alloy which has TWIP and/or TRIP properties and has the following composition, expressed in percentages:
| | | |
|---|---|---|
| carbon (C): | max. | 2 % |
| manganese (Mn): | | 10-30% |
| silicon (Si): | max. | 6 % |
| aluminium (Al): | max. | 8 % |
| niobium (Nb): | max. | 1 % |
| vanadium (V): | max. | 1 % |
| titanium (Ti): | max. | 1 % |
the remainder being iron and companion elements;
- forming a tubular profile (2) from the steel strip (1) and longitudinal seam welding of the tubular profile (2);
- bending the stabiliser rod (4).

2. Method according to claim 1, characterised in thatthe longitudinal seam welding is carried out as high frequency welding or laser welding.

3. Method according toeither claim 1 or claim 2, **characterised in that** the steel strip (1) is cold-rolled to form a tubular profile (2) prior to the forming step.

4. Method according toany of claims 1 to 3, **characterised in that** during the bending of the stabiliser rod (4), the material is strengthened in the bent regions.

5. Method according toany of claims 1 to 4, **characterised in that** after the longitudinal seam welding, the tube (9)produced is drawn over a mandrel, in particular in the cold-drawing process.

6. Method according tothe preceding claim, **characterised in that** an annealing process is carried out before or after the cold-drawing process.

7. Method according toany of claims 1 to 6, **characterised in that** the tubular profile (2) is hot formed.

8. Method according tothe preceding claim, characterised in thatthe tool is cooled at least in part for hot forming.

9. Method according toany of the preceding claims, characterised in thata passive motor vehicle stabiliser(5) is produced, each end (7) of the motor vehicle stabiliser (5) being provided with a receiving portion for coupling to external components.

10. Method according tothe preceding claim,characterised in thatthe end (7) is flattened and is provided with a recess (8) for connecting a further component.

## Revendications

1. Procédé de fabrication d'un stabilisateur (5) pour véhicules automobiles, dans lequel une barre stabilisatrice (4) se présente sous la forme d'une pièce tubulaire creuse, **caractérisé par** les étapes suivantes consistant à :
- préparer une bande d'acier (1) en alliage d'acier contenant une forte teneur en manganèse, qui présente des propriétés TWIP et/ou TRIP et possède la composition suivante exprimée en pourcentage en poins :
| | | |
|---|---|---|
| Carbone (C) : | max. | 2 % |
| Manganèse (Mn) : | | 10 à 30 % |
| Silicium (Si) : | max. | 6 % |
| Aluminium (Al) : | max. | 8 % |
| Niobium (Nb) : | max. | 1 % |
| Vanadium (V) : | max. | 1 % |
| Titane (Ti) : | max. | 1 % |
le restant étant formé de fer et d'éléments d'accompagnement,
- former un profilé tubulaire (2) à partir de la bande d'acier (1) et souder par un cordon longitudinal le profilé tubulaire (2), et
- cintrer la barre stabilisatrice (4).

2. Procédé selon la revendication 1, **caractérisé en ce que** le soudage par un cordon longitudinal est réalisé par soudage haute fréquence ou par soudage au laser.

3. Procédé selon l'une quelconque des revendications 1 ou 2, **caractérisé en ce que** la bande d'acier (1) est laminée à froid avant la formation d'un profilé tubulaire (2).

4. Procédé selon l'une quelconque des revendications 1 à 3, **caractérisé en ce que**, lors du cintrage de la barre stabilisatrice (4), on effectue une consolidation du matériau dans les zones de cintrage.

5. Procédé selon l'une quelconque des revendications 1 à 4, **caractérisé en ce que**, après le soudage par un cordon longitudinal, le tube fabriqué (9) est étiré sur un mandrin, en particulier dans un procédé d'étirage à froid.

6. Procédé selon la revendication précédente, **caractérisé en ce que**, avant ou après le procédé d'étirage à froid, on effectue un procédé de recuit.

7. Procédé selon l'une quelconque des revendications 1 à 6, **caractérisé en ce que** le profilé tubulaire (2) est déformé à chaud.

8. Procédé selon la revendication précédente, **caractérisé en ce que** l'outil permettant la déformation à chaud est refroidi au moins en partie.

9. Procédé selon l'une quelconque des revendications précédentes, **caractérisé en ce que** l'on fabrique un stabilisateur passif (5) pour véhicule automobile, dans lequel une extrémité respective (7) du stabilisateur de véhicule automobile (5) est pourvue d'un logement destiné à être couplé à des pièces externes.

10. Procédé selon la revendication précédente, **caractérisé en ce que** l'extrémité (7) est aplatie et est fournie avec une cavité (8) pour la connexion sur une autre pièce.
